# EUROPÄISCHE PATENTANMELDUNG

(11) **EP 2 479 485 A2**
(43) Veröffentlichungstag der Anmeldung: **25.07.2012**
(21) Anmeldenummer: 12157044.4
(22) Anmeldetag: 05.07.2010
(51) Int. Cl.: F21S 8/02, F21S 9/03, F21V 33/00, E01C 17/00, F21V 31/04, F21W 111/02, F21W 131/109, F21Y 101/02

(54) **Autarkes Leuchtelement und leuchtender Pflasterstein in Form eines Kunststeins oder Natursteins**

(30) Priorität: 06.07.2009 DE 102009027489
(62) Teilanmeldung aus: 10734943.3
(71) Anmelder: Recyfoam SA, 4040 Herstal (BE)
(72) Erfinder: Blocken, Wilfried, 3732 Schalkhoven (BE)
(74) Vertreter: Bauer, Wulf

(57) **Zusammenfassung**

Ein Leuchtelement (22) hat einen prismatischen, vorzugsweise zylindrischen Körper (28) aus einem transparenten Kunststoff, der alle Oberflächen des Körpers (28) bildet. Der Körper (28) liegt in unterschledlichen, standardisierten Ausführungen vor. Das Leuchtelement (22) weist elektrische Bauteile (36) auf, zu denen eine photovoltaische Zelle (38), ein Ladungsspeicher (40), ein Steuergerät (42) und ein Leuchtmittel (44) gehören. Diese elektrischen Bauteile sind im Körper (28) eingebettet. Ein Leuchtender Stein, insbesondere Pflasterstein, in Form eines Kunststeins mit autarkem Leuchtelement (22) weist mindestens ein Leuchtelement (22) und einen Steinkörper (20) auf.

## Beschreibung

Die Erfindung bezieht sich auf ein autarkes Leuchtelement, das insbesondere für den Einsatz in einen Pflasterstein in Form eines Kunststeins oder Natursteins vorgesehen ist, und auf einen leuchtenden Pflasterstein, der mindestens ein Leuchtelement und einen Steinkörper aufweist, wobei der Steinkörper aus transparentem Kunststoff und/oder aus einem Natursteinmaterial und/oder einem Kunststeinmaterial realisiert ist. Ein derartiges Leuchtelement kann in einem derartigen Stein verwendet werden kann, es kann aber auch in anderen Anwendungen benutzt werden. Es kann beispielsweise in eine beliebige Bohrung eingesetzt werden, diese Bohrung kann sich in einer Mauer, an beliebiger Stelle eines Bauwerks oder dergleichen befinden. Dieses Leuchtelement kann also an unterschiedlichsten Stellen und nicht nur in einem Pflasterstein Anwendung finden. Schließlich bezieht sich die Erfindung noch auf einen autarken leuchtenden Stein aus Kunststoff, in den elektrische Bauteile, insbesondere eine photovoltaische Zelle, ein Ladungsspeicher, ein Steuergerät und ein Leuchtmittel, eingebettet sind. In diesem Fall ist das autarke Leuchtelement selbst der autark leuchtende Stein.

Für die Beleuchtung von Einfahrtswegen, die Beleuchtung um Schwimmbecken herum, die Beleuchtung von Gartenwegen, die Beleuchtung von Mauern und ähnlichen Anwendungen werden Leuchtkörper gewünscht, die keine separate Stromversorgung benötigen. Die Leuchtkörper sollen autark sein. Sie sollen tagsüber einfallendes Sonnenlicht über eine photovoltaische Zelle aufnehmen und in einem Ladungsspeicher speichern, ein Steuergerät regelt die Ladung. Bei Dunkelheit steuert das Steuergerät ein Leuchtmittel an, das über den Ladungsspeicher mit Spannung versorgt wird. Als Sensor für Dunkelheit kann die photovoltaische Zelle eingesetzt werden, es kann aber auch ein separater Lichtsensor vorgesehen sein.

Will man derartige Leuchtkörper in ein Pflaster integrieren, beispielsweise in das Pflaster eines Einfahrtsweges, so empfiehlt sich, einen Pflasterstein speziell für die Leuchtfunktion aufzubereiten. Dies hat den Vorteil, dass der entsprechende Pflasterstein wie ein normaler, regulärer Pflasterstein in den Verband eingebracht werden kann. Er unterscheidet sich von den anderen Pflastersteinen nur dadurch, dass er mindestens ein autarkes Leuchtelement aufweist. Er unterscheidet sich von den regulären Pflastersteinen nicht hinsichtlich seiner Kontaktflächen mit diesen anderen Steinen bzw. den Fugen. Er ist zwar nicht so stabil wie ein regulärer Pflasterstein, er kann aber durch zusätzliche Maßnahmen, wie Armierung und/oder hochwertigeren Beton oder entsprechendes Material in seiner Festigkeit aufgewertet werden. Vorzugsweise eignen sich derartige leuchtende Pflastersteine für den Teil von Wegen, in dem keine großen Belastungen von Fahrzeugen auftreten. Diese Pflastersteine sollen also möglichst nicht von Fahrzeugen überrollt werden.

Schließlich werden Steine gewünscht, die vollständig aus Kunststoff hergestellt sind. Der Kunststoff umhüllt alle Bauteile der autarken Leuchte, ebenso wie bei dem beschriebenen Leuchtelement, nur dass dieser Stein nun unmittelbar in eine Pflasterung eingebaut werden kann, er also die Größe eines regulären Pflastersteins aufweist.

Der Erfindung liegt die Aufgabe zugrunde, einen Leuchtkörper in Form eines leuchtenden Pflastersteins, leuchtenden Steins oder eines Leuchtelements anzugeben, der sich günstig in vorhandene Strukturen einfügen lässt und ebenso günstig bei Neuanlagen eingesetzt werden kann, eine dauerhafte Einbettung und sichere Verbindung aufweist, die auch bei großen Temperaturschwankungen nicht schadhaft wird und die sich vielfältig einsetzen lässt.

Gelöst wird diese Aufgabe durch ein Leuchtelement nach Anspruch 1. Es kann Bestandteil eines leuchtenden Pflastersteins nach dem Patentanspruch 8 sein und/oder selber die Form eines Steins haben.

Die Erfindung schlägt ein standardisiertes Leuchtelement vor, das in wenigen Ausführungen hergestellt wird. Es hat prismatische Form, insbesondere zylindrische Form. Es enthält in seinem Inneren elektrische Bauteile, insbesondere eine photovoltaische Zelle, einen Ladungsspeicher, ein Steuergerät und ein Leuchtmittel. Diese elektrischen Bauteile sind permanent eingebettet in einen transparenten Kunststoff, beispielsweise Polykarbonat.

Ein derartiges Leuchtelement kann in eine beliebige Ausnehmung, insbesondere Bohrung, eingesetzt werden, die in einen Pflasterstein, sei es ein Kunststein oder Naturstein, oder in eine beliebige andere Struktur, beispielsweise in eine Mauer, eingebracht ist. Die Ausnehmung hat dabei eine etwas größere Abmessung als der prismatische Körper des Leuchtelements. Dadurch passt zwischen Leuchtelement und Ausnehmung eine Klebmasse, insbesondere ein Silikonmaterial. Diese verklebt einerseits das Leuchtelement mit dem Stein, andererseits nimmt es alle thermischen Spannungen zwischen beiden auf. Auf diese Weise lässt sich in einem beliebigen Pflasterstein oder in eine beliebige Mauer das Leuchtelement unterbringen, indem man die entsprechende Ausnehmung, insbesondere Bohrung durchführt und das Leuchtelement einsetzt. Weitere Schritte sind nicht notwendig.

Der leuchtende Pflasterstein weist mindestens ein Leuchtelement der hier beschriebenen Art auf. Er ist mit diesem Leuchtelement über eine Schicht an Klebmasse, insbesondere in Silikon, verbunden. Dabei schließen vorzugsweise eine Lichtaustrittsfläche des Leuchtelements und eine Oberseite des Pflastersteins bündig ab. Die Klebmasse tritt möglichst nicht gegen die Oberfläche vor, sondern ist mit dieser bündig.

In einer bevorzugten Ausführung hat das Leuchtelement eine Länge, die etwas kürzer ist als die Tiefe der Ausnehmung. Dadurch ist vermieden, dass das Leuchtelement nach unten oder nach hinten gegenüber der Ausnehmung hervorsteht.

Das Leuchtelement ist in einer bevorzugten Ausführung so ausgeführt, dass seine elektrischen Bauteile sich im Wesentlichen in Nähe der Lichtaustrittsfläche befinden. Unterhalb der elektrischen Bauteile wird das Leuchtelement nur noch durch das Kunststoffmaterial gebildet. Dort kann das Leuchtelement durchschnitten werden und auf diese Weise gekürzt werden, ohne dass man mit den elektrischen Bauelementen in Kollision kommt. Auf diese Weise kann das Leuchtelement unterschiedlichen Dicken von Steinen, Mauern und dergleichen angepasst werden.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im Näheren erläutert werden. In dieser Zeichnung zeigen:
- Fig. 1:: eine perspektivische Darstellung eines leuchtenden Pflastersteins mit nur einem Leuchtelement,
- Fig. 2:: einen Schnitt entlang der Schnittlinie II-II in Fig. 1,
- Fig. 3:: eine perspektivische Darstellung eines Leuchtelements, wie es in den Figuren 1 und 2 dargestellt ist,
- Fig. 4:: einen Schnitt ähnlich wie in Figur 2 durch eine zweite Ausführung des Pflastersteins, und
- Fig. 5:: einen Schnitt ähnlich wie in Figur 2 durch eine dritte Ausführungsform des Pflastersteins.

Der Pflasterstein hat einen Steinkörper 20, der aus einem Material eines Natursteins, beispielsweise Basalt oder Marmor, und/oder aus einem Kunststeinmaterial, insbesondere Beton, und/oder aus einem Kunststoff hergestellt ist. Der Steinkörper 20 hat Außenabmessungen, die vorzugsweise mit den Abmessungen eines üblichen regulären Pflastersteins übereinstimmen. Dadurch kann der Pflasterstein beim Verlegen problemlos in einen Verbund eingebracht werden. Er kann auch nachträglich in eine bereits bestehende Fläche eingebracht werden, indem ein regulärer Pflasterstein entfernt und durch einen leuchten Pflasterstein nach der Erfindung ersetzt wird. Dabei kann auch der reguläre Stein ohne Entnahme aus der bereits bestehenden Fläche mit einem Leuchtelement 22 ausgerüstet werden, indem in situ eine Ausnehmung 24 in den regulären Stein eingebracht wird und anschließend in die Ausnehmung 24 einerseits eine Klebmasse 26 und andererseits ein Leuchtelement 22 eingesetzt werden.

Es ist auch nicht notwendig, dass der Pflasterstein in einem periodischen Verbund verlegt ist, er kann in einer beliebigen Anordnung verlegt sein. Ein entscheidender Vorteil der Erfindung liegt darin, dass in eine bereits vorhandene Fläche oder auch in eine bereits vorhandene Mauer auch nachträglich ein Leuchtelement 22 eingesetzt werden kann.

Wenn in der Beschreibung lediglich ein Leuchtelement 22 pro Stein beschrieben und dargestellt ist, so bedeutet dies nicht, dass nicht auch weitere Leuchtelemente 22 in einem Stein untergebracht sein können.

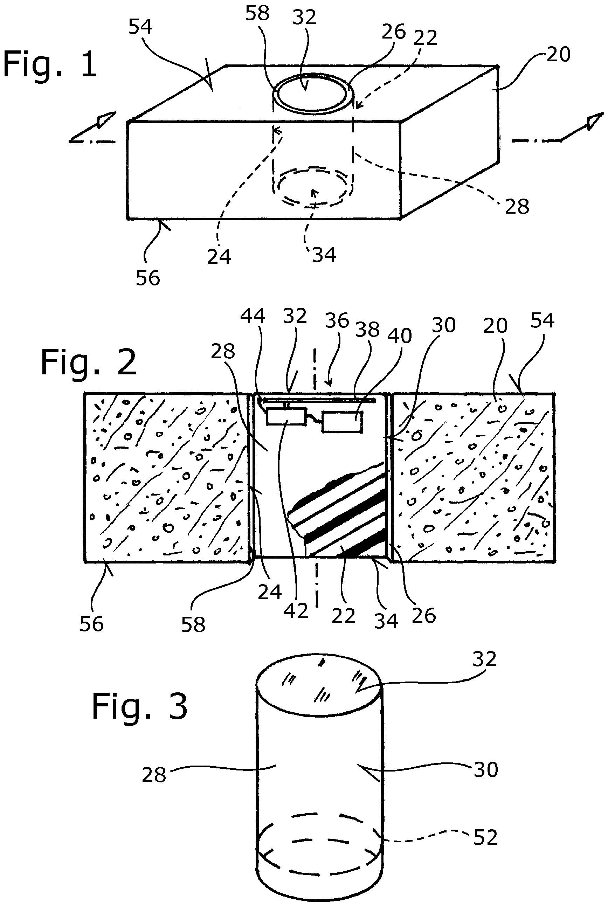

Die Leuchtelemente 22 der ersten und zweiten Ausführung sind separate Bauelemente, die auch separat in den Verkauf gelangen können und sollen. Vorzugsweise liegt das Leuchtelement 22 nur in wenigen, standardisierten Ausbildungen vor, von denen Figur 3 eine zeigt. Das Leuchtelement 22 hat einen prismatischen Körper 28, der durch eine umlaufende Seitenwand 30, eine Lichtaustrittsfläche 32 und eine Unterfläche 34 begrenzt ist. Die Lichtaustrittsfläche 32 und die Unterfläche 34 haben übereinstimmende Form, vorzugsweise Kreisform, es kommen aber auch Rechteckform und Quadratform in Frage.

In einer standardisierten Ausbildung hat das Leuchtelement 22 Zylinderform mit einem Durchmesser von etwa 93 mm. Für die Ausnehmung 24 wird ein Bohrer, insbesondere Kernbohrer, benutzt mit einem Durchmesser von 101 mm, ein derartiger Bohrer ist häufig ohnehin schon bei den einschlägigen Betrieben, die die Verlegung vornehmen, vorhanden.

Der Körper 28 des Leuchtelements 22 ist aus einem transparenten, insbesondere glasklaren Kunststoff gefertigt. Es eignen sich hier insbesondere Polykarbonat und Polyacryl. Speziell geeignet ist der Kunststoff GTS von der Firma Voss Chemie. Es handelt sich dabei um ein lichtstabilisiertes Orthophthalsäure-Harz zur Herstellung von Eingießteilen und starren Formteilen. Die Härtung erfolgt kalt. Dies hat Vorteile für die eingebetteten elektrischen Bauteile 36. Diese befinden sich vollständig innerhalb des Körpers 28. Es sind keinerlei Zuleitungen, Kontakte oder dergleichen nach außen geführt. Die Oberfläche des Körpers 28 wird ausschließlich durch den Kunststoff gebildet.

Zu den elektrischen Bauteilen 36 gehören insbesondere eine photovoltaische Zelle 38, ein Ladungsspeicher 40, der vorzugsweise als Kondensator ausgebildet ist, ein Steuergerät 42 und ein Leuchtmittel 44. Als Leuchtmittel 44 kommen insbesondere LEDs, OLEDs, Lumineszenzplatten und dergleichen in Frage, jedenfalls Leuchtmittel, die bei der Lichtemission im Wesentlichen kalt bleiben.

Das Steuergerät 42 ist mit den weiteren Bauteilen 38, 40, 44 verbunden. Es überwacht den Tageszustand und den Nachtzustand. Im Tageszustand findet eine Aufladung des Ladungsspeichers 40 statt. Solange eine ausreichende Spannung von der photovoltaische Zelle 38 geliefert wird, liegt der Tagzustand vor. Sinkt die von der photovoltaische Zelle 38 gelieferte Spannung unterhalb eines gewissen Niveaus, schaltet das Steuergerät 42 in den Nachtzustand über. Nun wird das Leuchtmittel 44 mit dem Ladungsspeicher 40 verbunden, es findet eine Abgabe von Licht statt. Zwischen Nachtzustand und Tageszustand gibt es vorzugsweise einen Zwischenbereich, in dem weder eine Aufladung erfolgt, weil nicht genügend Licht dafür zur Verfügung steht, noch eine Lichtabgabe erfolgt, weil es noch nicht genügend dunkel ist.

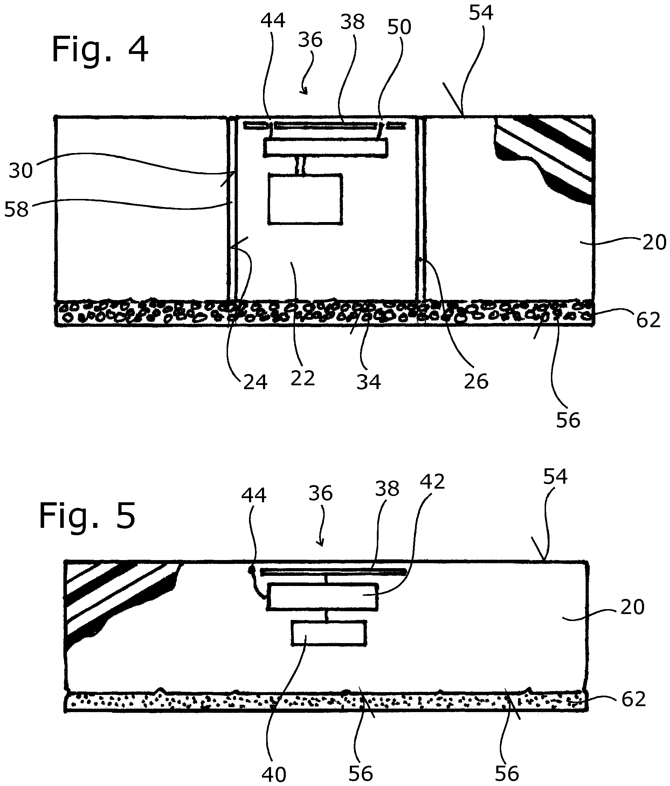

Den größten Teil der Fläche der Lichtaustrittsfläche 32 nimmt die photovoltaische Zelle 38 für sich ein. Es sind mindestens 70%, vorzugsweise mindestens 80% der Fläche der Lichtaustrittsfläche 32. Die Leuchtmittel 44 sind üblicherweise in ihrer Fläche deutlich kleiner als die photovoltaische Zelle 38, insbesondere in ihrer Ausführung als LEDs oder OLEDs. Entsprechend sind sie auch in den Figuren 2, 4 und 5 dargestellt. Dabei hat es sich als besonders günstig herausgestellt, in die photovoltaische Zelle 38 kleine Durchlässe 50 zu bohren, durch die die Leuchtmittel 44 hindurchragen, siehe Figur 4. Auf diese Weise kann die photovoltaische Zelle 38 praktisch die gesamte zur Verfügung stehende Fläche der Lichtaustrittsfläche 32 einnehmen, insbesondere über 90% dieser.

Die elektrischen Bauteile 36 gehören ansonsten im Wesentlichen zum Stand der Technik, zu weiteren Informationen wird auf den Stand der Technik insoweit verwiesen.

Die elektrischen Bauteile 36 sind relativ nahe an der Lichtaustrittsfläche 32 angeordnet. Der Abstand zwischen der Lichtaustrittsfläche 32 und der Oberfläche der photovoltaische Zelle 38 ist möglichst gering, er beträgt nur wenige Millimeter, z.B. 1 bis 6 mm. Der Platz unterhalb der photovoltaische Zelle 38 wird für das Steuergerät 42 und den Ladungsspeicher 40 verwendet. Unterhalb der elektrischen Bauteile 36 hat der Körper 28 keine weiteren Einbauteile, er besteht dort nur aus Kunststoff. Dies bedeutet, dass er dort gekürzt werden kann. Figur 3 zeigt einen Trennschnitt 52 im unteren Bereich des Körpers 28. Auf diese Weise genügt es, für jede einzelne von beispielsweise 3 bis 4 Ausbildungen bzw. Typen des Leuchtelements 22 nur eine einzige Länge anzubieten. Der Nutzer sägt den Körper 28 auf die geeignete Länge ab.

Die Ausnehmung 24 erstreckt sich von einer Oberseite 54 des Steinkörpers bis zu einer Unterseite 56 des Steinkörpers. Als Tiefe der Ausnehmung wird der Abstand von Oberseite 54 zu Unterseite 56 bezeichnet. Die Ausnehmung 24 hat eine Lochwand, die in den gezeigten Ausführungsbeispielen zylindrisch ist, sie kann aber auch rechteckig oder quadratisch sein. Sie kann auch andere Formen haben. Es werden allerdings einfache Formen mit hoher Symmetrie, insbesondere die Kreisform, bevorzugt.

Der Durchmesser der Ausnehmung 24 ist etwas größer als der Durchmesser des Körpers 28. Es verbleibt ein freier, umlaufender Spalt 58, wenn das Leuchtelement 22 in die Ausnehmung 24 eingesetzt ist. Dieser umlaufende Spalt 58 hat unabhängig von der Form eine Dicke von mindestens 1 mm, höchstens 10 mm, insbesondere liegt die Dicke zwischen 2 und 5 mm. Vorzugsweise hat der umlaufende Spalt 58 überall konstante Abmessungen und sind die Abweichungen von der konstanten Abmessung kleiner als 20%, insbesondere kleiner als 10%. Der umlaufende Spalt 58 wird mit einer Klebmasse 26 gefüllt, die aushärtet, insbesondere wird hier ein Silikon eingesetzt. Es eignen sich lichtdurchlässige, insbesondere glasklare Silikone. Die Klebmasse 26 verbindet das Leuchtelement 22 mit dem Steinkörper 20. Es wird eine permanente Verbindung angestrebt. Es wird angestrebt, dass die Verbindung möglichst überhaupt nicht, jedenfalls nur mit speziellen Werkzeugen und aufwendig wieder gelöst werden kann.

Die Klebmasse 26 gleicht alle thermischen Ausdehnungsunterschiede zwischen dem Material des Steinkörpers und dem Kunststoffmaterial des Körpers 28 aus.

Wie Figur 2 zeigt, ist in axialer Richtung das Leuchtelement 22 etwas kürzer als die Tiefe der Ausnehmung 24. Es soll so sein, dass das Leuchtelement 22 nicht an der Unterseite 56 vorragt.

Die Klebmasse 26 ist vorzugsweise ein Elastomer, das sich möglichst dauerhaft und vollflächig einerseits mit dem Material des Steinkörpers 22 und andererseits mit dem Kunststoff des Körpers 28 verbindet. Ggf. kann ein Haftvermittler, auch Primer genannt, eingesetzt werden. So wird ein erster Haftvermittler, wenn nötig, auf die umlaufende Seitenwand 30 des Körpers 28 aufgebracht, ein zweiter Haftvermittler wird auf die Innenwand der Ausnehmung 24 aufgebracht. Danach wird die passende Klebmasse 26 eingesetzt.

Die Klebmasse 26 wird vorzugsweise durch Gießen eingefüllt. Verfahrensmäßig wird der Pflasterstein mit seiner Oberseite 54 nach unten auf eine glatte Auflage gelegt, es wird ein Leuchtelement 22 in die Ausnehmung 24 eingefügt und wird dann von oben, in der späteren Einbaulage ist dies unten, die gießfähige Klebmasse 26 eingefüllt. Diese härtet nach gewisser Zeit, insbesondere in möglichst kurzer Zeit, ab.

Es ist aber auch möglich, ein eher breiartiges, pastöses Material für die Klebmasse 26 zu verwenden und in die Ausnehmung 24 einzubringen, beispielsweise mit einer Kelle. Anschließend wird das Leuchtelement 22 in diese Masse hineingedrückt, überstehende Masse wird im Bereich der Lichtaustrittsfläche 32 abgetragen, bevor sie aushärtet. Bei dieser Verfahrensweise ist es günstig, wenn die Ausnehmung 24 an der Unterseite 56 irgendwie verschlossen ist. Dies ist bereits bei verlegten Pflastersteinen ohnehin der Fall. Es ist zumeist auch dann der Fall, wenn die Ausnehmung 24 in eine Mauer eingebracht wird. Nötigenfalls kann man die Ausnehmung 24 mit geeigneten Mitteln an der Unterseite 56 verschließen.

Ein erheblicher Vorteil der Erfindung liegt darin, dass das Leuchtelement 22 in beliebiger Einbaulage in die Ausnehmung 24 eingebracht werden kann.

Als vorteilhaft hat sich herausgestellt, wenn die Klebmasse 26 einen optischen Brechungsindex aufweist, der um mindestens 0,5, vorzugsweise mindestens 1 größer ist als der Brechungsindex des Kunststoffs, also z.B. des Gießharzes. Dann wird eine Totalreflektion ermöglicht und viel Licht über die Lichtaustrittsfläche 32 abgegeben.

Die Klebmasse 26 hat vorzugsweise eine deutlich geringere Härte als die Härte des Gießharzes des Körpers 28 und als die Härte des Materials des Steinkörpers 20 aufweist, insbesondere, dass die Klebmasse 26 eine Shore A Härte von kleiner als 90 und größer als 25, insbesondere von kleiner als 80 und größer als 30, aufweist.

Im Folgenden wird nun das Ausführungsbeispiel für Fig. 4 beschrieben. Hier besteht der Steinkörper 20 aus einem Kunststoff. Es kann das Kunststoffmaterial des Körpers 28 verwendet werden, es kann aber auch ein anderer, beispielsweise preiswerterer Kunststoff eingesetzt werden. Wie im ersten Ausführungsbeispiel wird eine Ausnehmung 24 erstellt. Es wird, wie im ersten Ausführungsbeispiel, in diese ein Leuchtelement 22 eingebracht. Wieder erfolgt die Verbindung über eine Klebmasse 26.

Das zweite Ausführungsbeispiel nach Figur 4 hat zusätzlich eine Unterschicht 62. Sie besteht aus einer Lage an Material, das eine gewünschte, insbesondere einheitliche Färbung aufweist, insbesondere ist dieses Material weiß. Insbesondere ist die Unterschicht 62 von kleinen, weißen Steinen gebildet, beispielsweise im Körnungsband 1 - 3 mm. Es kann auch weißes Pulver verwendet werden, wie dies im dritten Ausführungsbeispiel nach Figur 5 der Fall ist. Entscheidend ist, dass die Unterschicht 62 eine regelmäßige Struktur und Farbe hat, die auch von einem leuchtenden Pflasterstein zu einem anderen leuchtenden Pflasterstein nicht wesentlich unterschiedlich ist, vorzugsweise auch nicht sehr unterschiedlich ist zu einem regulären Pflasterstein.

Die Unterschicht 62 hat zwei entscheidende Vorteile. Einerseits wirkt sie als reflektierendes Mittel, das nach unten gelangendes Licht wieder nach oben leitet, insbesondere streut. Andererseits bildet sie dann, wenn der Steinkörper 20 transparent und vorzugsweise glasklar ist, eine definierte Basisfläche. Dadurch wird der ästhetische Eindruck, den man bei Sicht von oben auf den Pflasterstein hat, nicht durch zufällige Gegebenheiten des Unterbaus bestimmt, sondern immer durch die Unterschicht 62. Beim ersten Ausführungsbeispiel ist der Steinkörper 20 undurchsichtig, in diesem Ausführungsbeispiel wird eine Unterschicht 62 nicht eingesetzt.

Im dritten Ausführungsbeispiel nach Figur 5 wird kein separates Leuchtelement 22 verwendet, vielmehr bilden Leuchtelement 22 und Steinkörper 20 eine Einheit. Vorzugsweise wird als Material für den Steinkörper 20 der Kunststoff verwendet, der in den ersten beiden Ausführungsbeispielen den Körper 28 bildet. Im dritten Ausführungsbeispiel wird keine Klebmasse 26 eingesetzt. Es wird im Grunde ein Leuchtelement 22 hergestellt, das nunmehr allerdings die Größe eines kompletten Pflastersteins hat und nicht mehr dafür ausgelegt ist, in eine Ausnehmung 24 eingefügt zu werden. Auch im dritten Ausführungsbeispiel ist eine Unterschicht 62 vorgesehen, sie besteht nunmehr aus feinem, pulvrigem weißem Staub. Die Unterschicht 62 kann auch in derselben Farbe ausgeführt sein, die das Material der umliegenden Pflastersteine hat. Dadurch tritt der selbstleuchtende Pflasterstein nach dem dritten Ausführungsbeispiel optisch zurück und wird den umgebenden regulären Pflastersteinen ähnlicher.

Der Steinkörper besteht vorzugsweise aus mindestens einem der folgenden Materialien: Beton, Naturstein, Kunststoff. Der umlaufende Spalt (58) ist vorzugsweise mindestens 1 mm und höchstens 10 mm, insbesondere zwischen zwei und fünf Millimeter dick. Der umlaufende Spalt (58) hat vorzugsweise überall eine konstante Abmessung, und Abweichungen von der konstanten Abmessung sind kleiner als 20%, insbesondere kleiner als 10%. Vorzugsweise ist die Klebmasse 26 lichtdurchlässig. Vorzugsweise ist ein Haftvermittler für den Kontakt zwischen Klebmasse 26 und entweder Leuchtelement 22 und/oder Lochwand vorgesehen. Vorzugsweise hat die Klebmasse 26 eine deutlich geringere Härte als die Härte des Gießharzes und als die Härte des Materials des Steinkörpers (20), insbesondere, weist die Klebmasse 26 eine Shore A Härte von kleiner als 90 und größer als 25, insbesondere von kleiner als 80 und größer als 30, auf. Vorzugsweise liegt das Leuchtelement in vorgegebenen, unterschiedlichen Längen, angepasst an die Tiefe der Ausnehmung üblicher Steinkörper vor, z.B. in Längen von 12, 10 und 8 cm, jeweils minus 10%, oder das Leuchtelement hat eine Länge größer als die Tiefe der Ausnehmung und ist an dem von seiner Oberfläche abgewandten Endbereich abgesägt und auf die Tiefe der Ausnehmung gekürzt.

## Patentansprüche

1. Leuchtelement (22), **dadurch gekennzeichnet, dass** es einen prismatischen, vorzugsweise zylindrischen Körper (28) aus einem transparenten Kunststoff aufweist, der alle Oberflächen des Körpers (28) bildet, dass der Körper (28) in unterschiedlichem, standardisierten Ausführungen vorliegt, dass das Leuchtelement (22) elektrische Bauteile (36) aufweist, zu denen eine photovoltaische Zelle (38), ein Ladungsspeicher (40), ein Steuergerät (42) und ein Leuchtmittel (44) gehören, und dass diese elektrischen Bauteile im Körper (28) eingebettet sind.

2. Leuchtelement (22) nach Anspruch 1, **dadurch gekennzeichnet, dass** es eine Lichtaustrittsfläche (32) hat, und dass die Lichtaustrittsfläche (32) sich in einer Entfernung von weniger als 10 mm, vorzugsweise weniger als 5 mm von den eingebetteten elektrischen Bauteilen, insbesondere der photovoltaischen Zelle (38), befindet.

3. Leuchtelement (22) nach Anspruch 1 oder 2, **dadurch gekennzeichnet, dass** mindestens eine der standardisierten Ausführungen des Leuchtelements (22) Zylinderform aufweist.

4. Leuchtelement (22) nach einem der vorangegangenen Ansprüche, **dadurch gekennzeichnet, dass** das Leuchtelement (22) die Form eines Prismas hat und vorzugsweise eine runde, quadratische oder rechteckförmige Grundfläche aufweist.

5. Leuchtelement (22) nach einem der vorangegangenen Ansprüche, **dadurch gekennzeichnet, dass** das Leuchtelement (22) ein lichtdurchlässiges, vorzugsweise transparentes Gießharz aufweist, das alle Oberflächen des Leuchtelements (22) bildet und in das die elektrischen Bauteile (36) eingebettet sind.

6. Leuchtelement (22) nach einem der vorangegangenen Ansprüche, **dadurch gekennzeichnet, dass** sich im Leuchtelement (22) die elektrischen Bauteile in einem Abstand kleiner als 8 cm, vorzugsweise kleiner als 6 cm und insbesondere kleiner als 4 cm von einer Oberfläche des Leuchtelements (22) befinden.

7. Leuchtelement (22) nach einem der vorangegangenen Ansprüche, **dadurch gekennzeichnet, dass** das Leuchtelement (22) in vorgegebenen, unterschiedlichen Längen, angepasst an die Tiefe der Ausnehmung (24) üblicher Steinkörper (20) vorliegt, z.B. in Länge von 12, 10 und 8 cm, jeweils minus 10%, oder dass das Leuchtelement (22) eine Länge größer als die Tiefe der Ausnehmung (24) hat und an dem von seiner Oberfläche abgewandten Endbereich abgesägt und auf die Tiefe der Ausnehmung (24) gekürzt ist

8. Leuchtender Stein, insbesondere Pflasterstein, in Form eines Kunststeins mit autarkem Leuchtelement (22) nach einem der vorangegangenen Ansprüche, wobei der Stein mindestens ein Leuchtelement (22) und einen Steinkörper (20) aufweist, der Steinkörper (20) eine Oberseite (54) und eine Unterseite (56) hat, der Steinkörper (20) mindestens eine Ausnehmung (24) aufweist, die sich von der Oberseite (54) zur Unterseite (56) erstreckt und für die Aufnahme eines Leuchtelements (22) ausgebildet ist, das Leuchtelement (22) eine Länge hat, die nicht länger ist als die zwischen Oberseite (54) und Unterseite (56) gemessene Tiefe der Ausnehmung (24), die Ausnehmung (24) eine Lochwand hat und zwischen Lochwand und Leuchtelement (22) ein umlaufender Spalt (58) gebildet ist, in dem sich eine Klebmasse (26) befindet.

9. Leuchtender Stein in Form eines Kunststeins nach Anspruch 7, wobei der Steinkörper (20) aus einem transparenten Kunststoff, insbesondere Polykarbonat, gefertigt ist.

10. Leuchtender Stein in Form eines Kunststeins nach Anspruch 7 oder 8, wobei die Klebmasse (26) einen optischen Brechungsindex aufweist, der größer ist, insbesondere um mindestens 0,5, insbesondere mindestens 1 größer ist als der optische Brechungsindex des Gießharzes.

11. Leuchtender Pflasterstein nach einem Ansprüche 6 oder 7, **dadurch gekennzeichnet, dass** er eine Unterschicht (56) aufweist, die sich unterhalb der Unterseite befindet und die zumindest teilweise durch eine homogene, insbesondere weiße Schicht, vorzugsweise eine Schicht aus weißen Steinen, gebildet ist.
